# EUROPEAN PATENT SPECIFICATION

(11) **EP 1 093 614 B1**
(45) Date of publication and mention of the grant of the patent: **24.12.2008**
(21) Application number: 99933337.0
(22) Date of filing: 14.06.1999
(51) Int. Cl.: G06F 12/08

(54) **A CACHE SERVER NETWORK**
EIN PUFFER-SERVER-NETZWERK
RESEAU DE SERVEURS A ANTEMEMOIRE

(30) Priority: 03.07.1998 SE 9802400
(43) Date of publication of application: 25.04.2001
(73) Proprietor: TELEFONAKTIEBOLAGET LM ERICSSON (publ), 164 83 Stockholm (SE)
(72) Inventor: HULTGREN, Anders, S-182 34 Danderyd (SE)
(74) Representative: Norin, Klas
(86) International application number: PCT/SE1999/001050
(87) International publication number: WO 2000/002128

(56) References cited:
- GB-A- 2 317 723
- US-A- 5 305 389
- B.T. BENNET ET AL: 'Prefetching in a Multilevel Memory Hierarchy' IBM TECHNICAL DISCLOSURE BULLETIN vol. 25, no. 1, June 1982, page 88, XP000996881

## Description

### TECHNICAL FIELD

The present invention relates to a method and a device for a cache server system. In particular the invention relates to a method for predicting information flow on the internet and other data networks comprising cache servers, and to a network implementing the method.

### BACKGROUND OF THE INVENTION AND PRIOR ART

Data traffic in existing networks is constantly increasing. This is particularly the case for internet traffic, mainly due to the rapid increase in the number of users and the increase of information available on the internet. As a result of this increase in data traffic it is unavoidable that data traffic and server capacity sometimes hits bottlenecks.

A straightforward way of avoiding or reducing bottlenecks is to increase the capacity of servers and transmission lines. This, however, is very costly, since the capacity then must be adapted to an expected maximum throughput of data traffic.

Another way of lowering the requirement on servers and transmission lines is to cache information closer to the user. In other words caching, i.e. storing of replicated data in several locations and thereby closer to the users, increases the total network response capacity.

Thus, if data requested by a user can be found at a location which in some meaning is closer to the user than the location at which the original data is stored, time and capacity will be saved in the overall network. This will in turn result in lower costs for the overall system.

There are many different ways of configuring cache servers in a global data network, such as the Internet. For example, in a simple cache system, a cache server is connected to a user or to a group of users and data demanded by the user(s) is stored for further demand for a fixed period of time, or until the cache memory is filled, when the data is replaced according to some suitable algorithm, such as first in first out (FIFO).

In another configuration, a meta server is connected to a number of such cache servers. The meta server then keeps track of what data is stored in the different cache servers. Thus, when a user demands some particular data, the cache server to which it is connected is first searched for the data.

If the data cannot be found in that cache server, it is checked if the data is available in any of the cache servers connected to the meta server. If that is the case, i.e. the data is available in any of the servers constituting the group of servers connected to the meta server, the data is fetched from that server, instead of from the location where the data originally is stored.

Thus, when data not can be found in any of the cache servers, it must be requested from the original source. This is of course not desired, and in particular not if the request is issued when the network over which data is to be retrieved has a high load.

### SUMMARY

It is an object of the present invention to provide a method and a system by means of which data can be cached in a more efficient manner and by means of which hit rates can be increased.

This object and others are obtained by means of providing a forecast function, which can be implemented in a particular forecast caching server. The addition of such a function enables the cache system to cache data that have a higher probability of being demanded than is the case for conventional cache servers/cache server systems.

Thus, the forecast function instructs cache servers to which it is connected to pre-fetch data or to store or not to store data that is fetched from original source servers to serve customers in each area of caching servers served by the forecast caching server, via a certain protocol. The forecast caching server in a preferred embodiment keeps a database of all the addresses of all stored pages in all caching servers that it controls, as well as historic data.

### BRIEF DESCRIPTION OF THE DRAWINGS

The present invention will now be described in more detail by way of non-limiting examples and with reference to the accompanying drawings, in which:
- Fig. 1 is general view of a data system comprising caching servers.
- Fig. 2 is a view illustrating the configuration and functionality of a forecast caching server.

### DESCRIPTION OF PREFERRED EMBODIMENTS

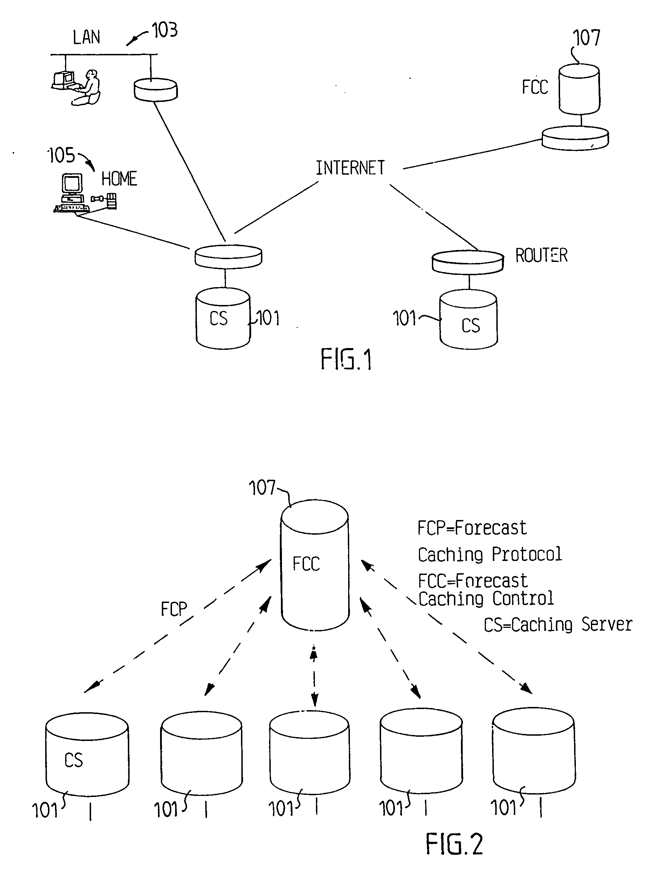

In Fig. 1 a data system is shown. The system comprises n1, n2, .... nk cache servers 101 with storage memory of m2,....mk megabyte, and network traffic throughput capacity of t1, t2, .... tk megabyte/second, and transaction capacities of tr1,tr2, ..... trk transactions per second. A transaction being defined as certain instructions being processed with certain data. They all serve defined connections, e.g. transmission lines from companies 103 and from modem pools 105 for private customers.

The ultimate performance and lowest traffic costs in such a system are found when all data that are demanded more than once is cached in the cache servers. To get closer to this goal, forecasting is used. This is illustrated by the forecast cache control function located in a server 107.

The server 107, is thus connected to a number of caching servers 101 and has means for keeping a record of which information is stored in the different servers 101. For each caching server and cache address a probability function can be constructed, which in a preferred embodiment can be composed of the following factors of which the server 107 has knowledge:
* caching server identity
* address
* address level
* time
* date
* historic demand (when was the address asked for)
* historic update frequency (and update information from original sources)
* what other addresses where demanded a time period before and after the address was demanded (demand correlation)
* other correlated data (here data about e.g. football games can be stored such that during and after matches certain sports addresses/webpages are usually more demanded, and can be pre-fetched)

In Fig. 2 the functionality of the forecast server 107 is illustrated more in detail. Thus, since all data have names/addresses, e.g. for internet web pages http://www.cnn.com/, all addresses can be seen as branches on a tree, where the address gets longer as the tree is explored from the stem, to main branch to smaller branches etc. The branches, in difference from real trees, also have links to totally different addresses.

The control function in the server 107 can therefore have means for labelling all addresses with a level and give different levels different priorities. Below is an example of how the levels can be given.
http://www.cnn.com/ LEVEL 1,1
http://customnews.cnn.com/cnews/pna-auth.welcome LEVEL 2,3
http://www.cnn.com/WORLD/ LEVEL 2,2
http://www.cnn.com/WORLD/europe/ LEVEL 3,3
http://www.cnn.com/WORLD/europe/9803/21/AP000638.ap.html LEVEL 4,6
http://www.cnn.com/interactive - legal.html#AP LEVEL 5,2
http://www.lexis-nexis.com/lncc/about/terms.html LEVEL 6,4
http://www.cnn.com/US/
http://www.cnn.com/LOCAL/
http://www.cnn.com/WEATHER/
http://www.cnn.com/WEATHER/allergy/
LEVEL x,y means how many links that are passed from the starting page before the page (=x) is reached, and how many / there are (=y; excluding http://)

Based on this and the other parameters listed above a demand forecast is made using some suitable statistical method, and this is then compared to the existing stored data and the traffic, i.e. the existing demand capacity and the free capacity. The free traffic capacity is then used to pre-fetch pages/addresses based on the demand forecast.

Thus, for example, if there is a very high hit frequency on a particular address during the last 2 minutes and one or several addresses of that particular high frequency address has an (x)-value that is low, e.g. 1 or 2, it is likely that such an address will be demanded soon and the data on that address is pre-fetched and stored in one of the servers 101 and some data that has a lower probability of being demanded is discarded.

The forecast caching server 107 controls the caching servers (CS) 101 via a forecast control protocol, which can consist of at e.g. the following instructions.
* Address info (CS id, address)
* Store question (CS id, address)
* Store answer (CS id, address, yes/no)
* Fetch (CS id, address, levels) (i.e. the forecast cache server 107 can order a certain cache server 101 to fetch a main address and a number of levels down from the main address)
* Traffic question/answer (CS id, capacity, Mbyte traffic last period, period)
* Storage question/answer (CS id, capacity, Mbyte last period, period)

An important feature of the forecast caching system as described herein is that the forecast caching server 107 always knows all addresses for which the web pages are stored in each caching server 101, the storage size and capacity, the traffic size and capacity.

Because it may be impossible or to expensive to store a demand function for all data that has been demanded, demand forecasts can be limited to addresses in number of x or y levels as described above. Because it may be impossible or to expensive to calculate a demand function for all data, decision rules for the forecast caching server for addresses without a demand function can be generalized from a limited set of data, such as:
- fill memory
- never store data the first time it is demanded unless there is free memory
- always store data the second time it is demanded
- first in first out if memory is filled

This function can also be delegated to and implemented in the caching servers 101.

Furthermore, in order to make it possible for the different cache servers 101 to inform each other about the currentness of web pages, an Update protocol can be defined, that can be used between any cooperating servers. This will result in that each source server, i.e. the server on which the original data is stored, has a log which states when every stored page and/or object of a page (e.g. picture, table, etc) was last updated.

Other severs can interrogate the source server (or his replicants), and compare to it's own log when the web page was stored to see if it has been updated. In this way, it is possible to make sure that a page is current without transferring all page data, only if any part of the page has been updated it has to be fetched again, or only the updated part/object. This saves capacity. Such exchange of information can be implemented with a protocol comprising the following instructions:
* Update question (Server id, page address)
* Update info (Server id, page address_1 , last updated, page object 1x, 1x last updated, page object 1y, 1y last updated, page address_2, last updated, page object 2x, 2x last updated, page object 2y, 2y last updated .....)

The update answer can of course be sent without a previous question, such as by agreement beforehand every minute/hour/etc.

In the network described above only one single forecast server controlling a plurality of cache servers is described. However, in a large network several forecast servers can be used. The forecast servers then controls a group of cache servers each and are interconnected with each other in a distributed manner.

In such a network solution a special protocol for exchange of information between the different forecast servers is used. Thus, by using such a protocol each forecast server has knowledge about or can ask for information on what data are stored in each cache server or cache server group.

The special protocol can also be used to send orders between the different forecast servers on which group of cache servers that is to store which data, or in another embodiment a negotiation is performed between the different forecast servers on which data that is to be stored in which cache server or group of cache servers.

In another preferred embodiment one in the multitude of forecast servers, which can be termed the main forecast server, is arranged to control the others, preferably by means of a special protocol similar to the one used for controlling the different cache servers. Such an arrangement will eliminate the need for a negotiation between the different forecast servers, since the main forecast server now will decide which data that will be stored at which location.

The use of a forecast caching function in a caching server system as described herein will thus lower traffic costs and increases response times. This is due to the fact that the memory capacity of the caching servers in the system will be utilized more efficiently in terms of hit rate and that transmission capacity can be better utilized, since transmission capacity not currently used can be used for pre-fetching data having a high probability of soon being requested.

## Claims

1. A data communication network comprising at least two cache servers to which users are connected, **characterized by** a forecast server connected to said at least two cache servers for issuing a forecast on which data in said at least two cache servers should be replaced with other data in order to increase the hit rate in said at least two cache servers.

2. A network according to claim 1, **characterized in that** the forecast server periodically is updated on which data that currently is stored in said at least two cache server.

3. A network according to claim 1 or 2, **characterized in that** the forecast server comprises means for ordering one particular cache server of said at least two cache servers to pre-fetch data having a higher probability of being requested than the data that is currently stored **in that** particular cache server.

4. A network according to any of claims 1 - 3, **characterized in that** the forecast server is connected to a group of cache servers, which it controls via a control protocol.

5. A network according to any of claims 1 - 4, **characterized in that** the forecast server has means for establishing a probability function for an address based on what other addresses where demanded a time period before and after the address was demanded.

6. A network according to any of claims 1 - 5, **characterized in that** the forecast server is co-located with one of said at least two cache servers.

7. A network according to any of claims 1 - 6, **characterized in that** several forecast servers are connected to each other.

8. A network according to claim 7, **characterized in that** the forecast servers are arranged to exchange information on which data that is stored in the cache servers to which the forecast servers are connected.

9. A network according to claim 7 or 8, **characterized in that** one of the forecast servers is arranged to control the others.

10. A method of pre-fetching data in a network comprising a plurality of cache servers each connected to a common forecast server, and where the forecast server is arranged to, via a protocol keep a record of which data is stored in the different servers, **characterized in that** the forecast server issues a forecast on which data in the plurality of cache servers should be replaced with other data in order to increase the hit rate for the plurality of cache servers.

11. A method according to claim 10, **characterized in that** the plurality of cache servers periodically is updates the forecast server on which data that currently is stored in the plurality of cache server.

12. A method according to claim 10 or 11, **characterized in that** the forecast server orders one particular cache server of the plurality of cache server to pre-fetch data having a higher probability of being requested than the data that is currently stored **in that** particular cache server.

13. A method according to any of claims 10 - 12, **characterized in that** the forecast is made based on probability function for an address, which in turn is based on what other addresses where demanded a time period before and after the address was demanded.

14. A method according to any of claims 10 - 12, when the network comprises several forecast servers to which different cache servers or groups of cache servers are connected, **characterized in that** the forecast servers can exchange information on which data that is stored in the different cache servers or groups of cache servers.

15. A method according to claim 14, **characterized in that** one of the several servers is arranged to control the others.

## Patentansprüche

1. Daten-Kommunikations-Netzwerk umfassend mindestens zwei Puffer-Server, mit denen die Benutzer verbunden sind, **gekennzeichnet durch** einen Forecast Server, der mit den mindestens zwei Puffer-Servern verbunden ist, um darüber einen Forecast auszugeben, welche Daten in den mindestens zwei Puffer-Servern mit anderen Daten ersetzt werden sollten, um die Trefferquote in den mindestens zwei Puffer-Servern zu erhöhen.

2. Netzwerk nach Anspruch 1, **dadurch gekennzeichnet, dass** der Forecast Server regelmäßig bezüglich der Daten aktualisiert wird, die gerade in den mindestens zwei Puffer-Servern gespeichert sind.

3. Netzwerk nach Anspruch 1 oder 2, **dadurch gekennzeichnet, dass** der Forecast Server ein Mittel umfasst, um einen bestimmten Puffer-Server der mindestens zwei Puffer-Server anzuweisen, Daten mit einer höheren Wahrscheinlichkeit gebraucht zu werden als die Daten, die gerade in jenem bestimmten Puffer-Server gespeichert sind, vorabzurufen.

4. Netzwerk nach irgendeinem der Ansprüche 1 bis 3, **dadurch gekennzeichnet, dass** der Forecast Server mit einer Gruppe von Puffer-Servern verbunden ist, die er über ein Steuerungsprotokoll steuert.

5. Netzwerk nach irgendeinem der Ansprüche 1 bis 4, **dadurch gekennzeichnet, dass** der Forecast Server ein Mittel hat, zum Erstellen einer Wahrscheinlichkeitsfunktion für eine Adresse, die darauf basiert, welche andere Adressen gefragt wurden, eine Zeitspanne vor und nachdem die Adresse gefragt wurde.

6. Netzwerk nach irgendeinem der Ansprüche 1 bis 5, **dadurch gekennzeichnet, dass** der Forecast Server zusammen mit einem der mindestens zwei Puffer-Server angeordnet ist.

7. Netzwerk nach irgendeinem der Ansprüche 1 bis 6, **dadurch gekennzeichnet, dass** mehrere Forecast Server miteinander verbunden sind.

8. Netzwerk nach Anspruch 7, **dadurch gekennzeichnet, dass** die Forecast Server angeordnet sind, um Informationen über die Daten auszutauschen, die in den Puffer-Servern mit denen die Forecast Server verbunden sind, gespeichert sind.

9. Netzwerk nach Anspruch 7 oder 8, **dadurch gekennzeichnet, dass** einer der Forecast Server angeordnet ist, um die anderen zu steuern.

10. Verfahren zum Vorabrufen von Daten in einem Netzwerk, umfassend eine Mehrzahl von Puffer-Servern, von denen jeder mit einem gemeinsamen Forecast Server verbunden ist, und wobei der Forecast Server angeordnet ist, um, über ein Protokoll, eine Aufzeichnung von den Daten zu behalten, die in den verschiedenen Servern gespeichert sind, **dadurch gekennzeichnet, dass** der Forecast Server darüber einen Forecast ausgibt, welche Daten in der Mehrzahl von Puffer-Servern mit anderen Daten ersetzt werden sollten, um die Trefferquote der Mehrzahl von Puffer-Servern zu erhöhen.

11. Verfahren nach Anspruch 10, **dadurch gekennzeichnet, dass** die Mehrzahl von Puffer-Servern regelmäßig den Forecast Server bezüglich der Daten aktualisiert, die gerade in der Mehrzahl von Puffer-Servern gespeichert sind.

12. Verfahren nach Anspruch 10 oder 11, **dadurch gekennzeichnet, dass** der Forecast Server einen bestimmten Puffer-Server der Mehrzahl von Puffer-Servern anweist, Daten mit einer höheren Wahrscheinlichkeit gebraucht zu werden als die Daten, die gerade in jenem bestimmten Puffer-Server gespeichert sind, vorabzurufen.

13. Verfahren nach irgendeinem der Ansprüche 10 bis 12, **dadurch gekennzeichnet, dass** der Forecast basierend auf einer Wahrscheinlichkeitsfunktion für eine Adresse gemacht wird, die ihrerseits darauf basiert ist, welche Adressen eine Zeitspanne vor und nachdem die Adresse gefragt wurde, gefragt wurde.

14. Verfahren nach irgendeinem der Ansprüche 10 bis 12, wenn das Netzwerk mehrere Forecast Server umfasst, mit denen verschiedene Puffer-Server oder Gruppen von Puffer-Servern verbunden sind, **dadurch gekennzeichnet, dass** die Forecast Server Informationen über die Daten, die in den verschiedenen Puffer-Servern oder Gruppen von Puffer-Servern gespeichert sind, austauschen können.

15. Verfahren nach Anspruch 14, **dadurch gekennzeichnet, dass** einer der mehreren Server angeordnet ist, um die anderen zu steuern.

## Revendications

1. Réseau de communication de données comprenant au moins deux serveurs de mémoire cache auxquels des utilisateurs sont connectés, **caractérisé par** un serveur de prévision connecté auxdits au moins deux serveurs de mémoire cache pour émettre une prévision concernant les données dans lesdits au moins deux serveurs de mémoire cache qui devraient être remplacées par d'autres données en vue d'augmenter le taux de réussite dans lesdits au moins deux serveurs de mémoire cache.

2. Réseau selon la revendication 1, **caractérisé en ce que** le serveur de prévision est actualisé de manière périodique concernant les données qui sont actuellement stockés dans lesdits au moins deux serveurs de mémoire cache.

3. Réseau selon la revendication 1 ou 2, **caractérisé en ce que** le serveur de prévision comprend un moyen pour ordonner à un serveur de mémoire cache particulier desdits au moins deux serveurs de mémoire cache de procéder à la lecture anticipée des données ayant une plus grande probabilité d'être demandées que celles étant actuellement stockées dans ce serveur de mémoire cache particulier.

4. Réseau selon l'une quelconque des revendications 1 à 3, **caractérisé en ce que** le serveur de prévision est connecté à un groupe de serveurs de mémoire cache qu'il contrôle via un protocole de contrôle.

5. Réseau selon l'une quelconque des revendications 1 à 4, **caractérisé en ce que** le serveur de prévision a un moyen pour établir une fonction de probabilité pour une adresse basée sur les autres adresses qui ont été demandées, une période de temps avant et après que l'adresse a été demandée.

6. Réseau selon l'une quelconque des revendications 1 à 5, **caractérisé en ce que** le serveur de prévision est colocalisé avec un desdits au moins deux serveurs de mémoire cache.

7. Réseau selon l'une quelconque des revendications 1 à 6, **caractérisé en ce que** plusieurs serveurs de prévision sont connectés l'un à l'autre.

8. Réseau selon la revendication 7, **caractérisé en ce que** les serveurs de prévision sont prévus pour échanger des informations concernant les données qui sont stockées dans les serveurs de mémoire cache auxquels les serveurs de prévision sont connectés.

9. Réseau selon la revendication 7 ou 8, **caractérisé en ce qu'**un des serveurs de prévision est prévu pour contrôler les autres.

10. Procédé de lecture anticipée de données dans un réseau comprenant une pluralité de serveurs de mémoire cache, chacun connecté à un serveur de prévision commun, et où le serveur de prévision est prévu pour garder, via un protocole, un enregistrement des données qui sont stockées dans les différents serveurs, **caractérisé en ce que** le serveur de prévision émet une prévision concernant les données de la pluralité de serveurs de mémoire cache qui devraient être remplacées par d'autres données en vue d'augmenter le taux de réussite pour la pluralité de serveurs de mémoire cache.

11. Procédé selon la revendication 10, **caractérisé en ce que** la pluralité de serveurs de mémoire cache actualise de manière périodique le serveur de prévision concernant les données qui sont actuellement stockées dans la pluralité de serveurs de mémoire cache.

12. Procédé selon la revendication 10 ou 11, **caractérisé en ce que** le serveur de prévision ordonne à un serveur de mémoire cache particulier de la pluralité de serveurs de mémoire cache de procéder à une lecture anticipée des données ayant une plus grande probabilité d'être demandées que les données étant actuellement stockées dans ce serveur de mémoire cache particulier.

13. Procédé selon l'une quelconque des revendications 10 à 12, **caractérisé en ce que** la prévision est effectuée sur la base d'une fonction de probabilité pour une adresse, elle-même basée concernant les autres adresses qui ont été demandées, une période de temps avant et après que l'adresse a été demandée.

14. Procédé selon l'une quelconque des revendications 10 à 12, lorsque le réseau comprend plusieurs serveurs de prévision auxquels des serveurs de mémoire cache différents ou des groupes de serveurs de mémoire cache sont connectés, **caractérisé en ce que** les serveurs de prévision peuvent échanger des informations concernant les données qui sont stockées dans les différents serveurs de mémoire cache ou groupes de serveurs de mémoire cache.

15. Procédé selon la revendication 14, **caractérisé en ce qu'**un des plusieurs serveurs est prévu pour contrôler les autres.
